# EUROPEAN PATENT SPECIFICATION

(11) **EP 3 604 032 B1**
(45) Date of publication and mention of the grant of the patent: **21.07.2021**
(21) Application number: 18721451.5
(22) Date of filing: 22.03.2018
(51) Int. Cl.: B60N 2/60, B60N 2/28, B60R 22/18

(54) **AUTOMOBILE CHILD SEAT HOOK MOUNTING SUPPORT AND AUTOMOBILE**
HAKENMONTAGESTÜTZE FÜR FAHRZEUGKINDERSITZ UND KRAFTFAHRZEUG
SUPPORT DE MONTAGE DE CROCHET DE SIÈGE POUR ENFANT D'AUTOMOBILE ET AUTOMOBILE

(30) Priority: 22.03.2017 CN 201710173542
(43) Date of publication of application: 05.02.2020
(73) Proprietor: PSA Automobiles SA, 78300 Poissy (FR)
(72) Inventor: ZHU, Kebin, Shanghai (CN); LI, Xianghui, Shanghai (CN); HUA, Zhiwei, Shanghai (CN); LI, Bing, Shanghai 200031 (CN); WEN, Zhanhua, Shanghai (CN)
(86) International application number: PCT/IB2018/051911
(87) International publication number: WO 2018/172965

(56) References cited:
- DE-A1-102011 112 601
- GB-A- 2 273 437
- US-A1- 2007 108 832
- US-A1- 2016 236 627
- US-B1- 6 224 129

## Description

### CROSS-REFERNCE TO RELATED APPLICATION

The present disclosure claims priority to Chinese patent application number 2017101735422, titled "vehicle child seat hook mounting bracket and vehicle", filed on March 22, 2017.

### FIELD OF TECHNOLOGY

The present disclosure relates to the technical field of automobile components and structures, particularly to a vehicle child seat hook mounting bracket and vehicle, specifically to a vehicle child seat hook mounting bracket and vehicle that have a simple structure, low manufacturing cost and high manufacturing efficiency, and can improve the structural stability.

### BACKGROUND

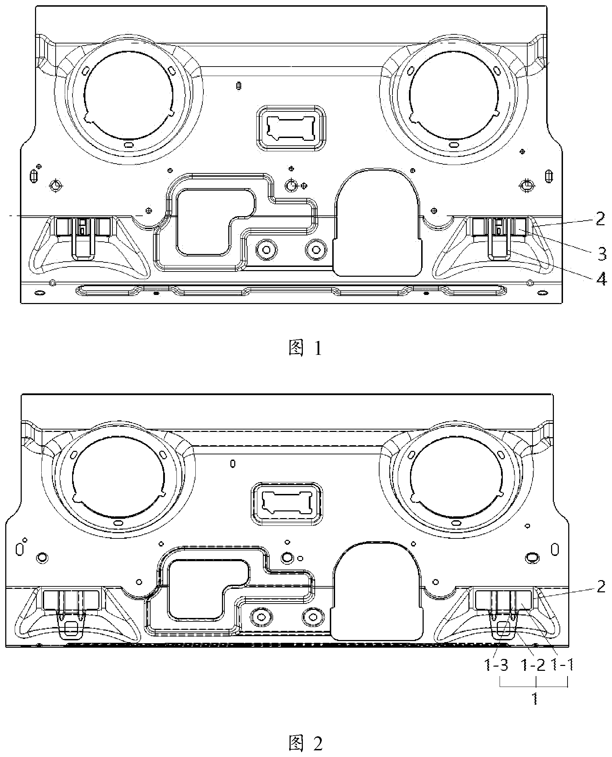

With the rapid development of the automobile industry, people are paying more and more attention to the ride safety of the vehicle. Wherein, the ride safety of children is particularly important. Therefore, most vehicles are provided with fixing brackets for mounting the safety seats for securing children. As shown in FIG. 1, currently, a common fixing bracket is composed of two parts, i.e., a fixing base 3 and a U-shaped hanging slot 4 for being mounted on a vehicle coatrack 2. During manufacturing, the U-shaped hanging slot 4 should be connected fixedly with the fixing base 3 by means of screwing or welding. For a fixing bracket adopting this structure, on the one hand, the fixing base 3 and the U-shaped hanging slot 4 need to be connected fixedly after being manufactured separately, the process is tedious, and the manufacturing cost is increased meanwhile the manufacturing efficiency is reduced; on the other hand, an assembled fixing bracket has a poor structural stability, and the assembly accuracy thereof is not guaranteed.

The documents US6224129 or US2007/108832 disclose each different design of a vehicle child seat hook mounting bracket.

### SUMMARY

### (I) The technical problems to be solved

The one objective of the present disclosure is to provide a vehicle child seat hook mounting bracket that has a simple structure, low manufacturing cost and high manufacturing efficiency, and can improve the structural stability, so as to solve the problem that the existing assembled fixing bracket has tedious process, high manufacturing cost, low manufacturing efficiency and poor structural stability.

The another objective of the present disclosure is to provide a vehicle comprising a vehicle child seat hook mounting bracket that has a simple structure, low manufacturing cost and high manufacturing efficiency, and can improve the structural stability, so as to solve the problem that the existing assembled fixing bracket has tedious process, high manufacturing cost, low manufacturing efficiency and poor structural stability.

### (II) Technical solutions

In order to solve the technical problems above, the present disclosure provides a vehicle child seat hook mounting bracket, which is arranged on a vehicle coatrack, and comprises a bracket body, wherein the bracket body comprises a mounting portion and a hanging portion extending from the mounting portion; a mounting through hole for fixing the vehicle child seat is provided on the hanging portion, the bracket body is fixed on the vehicle coatrack through the mounting portion.

Wherein, the mounting portion is elongated, the hanging portion is arranged perpendicular to a longer side of the mounting portion and located in a same horizontal plane with the mounting portion.

Wherein, the hanging portion is arranged in a middle of the longer side of the mounting portion.

Wherein, the bracket body further comprises at least one reinforcing rib, the reinforcing rib is arranged on a connecting transition portion between the mounting portion and the hanging portion.

Wherein, the reinforcing rib is arranged parallel to a shorter side of the mounting portion.

Wherein, a number of the reinforcing rib is two, the two reinforcing ribs are symmetrically arranged taking the symmetry axis of a shorter side of the mounting portion as center line.

Wherein, the reinforcing rib, mounting portion and hanging portion are formed integrally.

Wherein, connection between the mounting portion and the vehicle coatrack is formed by welding.

The present disclosure also provides a vehicle that comprises the vehicle child seat hook mounting bracket.

### (III) Beneficial effects

Above technical solutions of the present disclosure have the following advantages: the present disclosure provides a vehicle child seat hook mounting bracket, which is arranged on the vehicle coatrack, and comprises a bracket body, the bracket body comprises a mounting portion and a hanging portion extending from the mounting portion; a mounting through hole for fixing the vehicle child seat is provided on the hanging portion, the bracket body is fixed on the vehicle coatrack through the mounting portion. By applying the vehicle child seat hook mounting bracket provided by the present disclosure, wherein the mounting portion and the hanging portion are formed integrally, on the one hand the strength of the bracket body is effectively increased while the capability of the hanging portion to bear the load from forward and lateral directions is increased, such that the entire structure can meet the strength requirements better and can be applied to different child seats with different strength requirements; on the other hand, the mounting portion and the hanging portion are formed integrally, which has a simple structure, high manufacturing efficiency and low manufacturing cost, the bracket body is fixed on the vehicle coatrack through the mounting portion, it will not involve the vehicle body and the interior trims. Therefore the process is simplified, so that the manufacturing efficiency is further increased and the cost is saved.

### BRIEF DESCRIPTION OF THE DRAWINGS

FIG. 1 is a structural diagram of the prior art that the vehicle child seat hook mounting bracket is mounted on the vehicle coatrack;
FIG. 2 is a structural diagram of the vehicle child seat hook mounting bracket and that the vehicle child seat hook mounting bracket is mounted on the vehicle coatrack by the vehicle of the present disclosure;
FIG. 3 is a structural diagram of the vehicle child seat hook mounting bracket and the vehicle child seat hook mounting bracket implemented by the vehicle of the present disclosure.

In the drawings: 1: bracket body; 1-1: mounting portion; 1-2: hanging portion; 1-3: reinforcing rib; 1-2-1: mounting through hole; 2: vehicle coatrack; 3: fixing base; 4: U-shaped hanging slot.

### DETAILED DESCRIPTION

In order to clearly specify the objectives, technical solutions and advantages of the embodiments of the present disclosure, the technical solutions of the embodiments of the present disclosure will be described clearly and completely hereinafter with reference to the accompanying drawings of the embodiments of the present disclosure. Obviously, the described embodiments are only a part but not all of the embodiments of the present disclosure. Based on the embodiments of the present disclosure, all other embodiments obtained without creative efforts by the person of ordinary skill in the art shall be within the protection scope of the present disclosure.

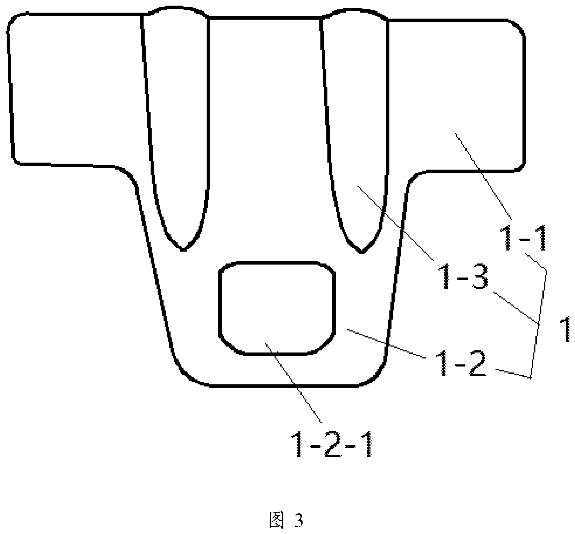

As shown in FIG. 2 and FIG. 3, the embodiment of the present disclosure provides a vehicle child seat hook mounting bracket, it is arranged on the vehicle coatrack 2, and comprises a bracket body 1. Specifically, the bracket body 1 comprises a mounting portion 1-1 and a hanging portion 1-2 extending from the mounting portion 1-1. In this embodiment, the mounting portion 1-1 and the hanging portion 1-2 are integrated, which on the one hand, effectively increases the strength of the bracket body 1 while increases the capability of the hanging portion 1-2 to bear the load from forward and lateral directions, such that the entire structure can meet the higher strength requirements and can be applied to different child seats with different strength requirements, therefore it has a wide application range; on the other hand, the integrated formation of the mounting portion 1-1 and the hanging portion 1-2 has a simple structure, high manufacturing efficiency and low manufacturing cost, the bracket body 1 is fixed on the vehicle coatrack 2 through the mounting portion 1-1, which does not involve the vehicle body and the interior trims, therefore the process is simplified, so that the manufacturing efficiency is further increased and the cost is saved. A mounting through hole 1-2-1 for fixing the vehicle child seat is provided on the hanging portion 1-2, which is easy to be installed and has a simple structure, and will facilitate the further reduction of the manufacturing cost; the bracket body 1 is fixed on the vehicle coatrack 2 through the mounting portion 1-1, wherein the shape and size of the mounting portion 1-1 match with that of the vehicle coatrack 2, so as to increase the contact area between the mounting bracket and the vehicle coatrack 2, thereby facilitating the improvements of the fixing effect between the mounting bracket and the vehicle coatrack 2 and the stability of the overall structure., Therefore the safety of the fixed vehicle child seat is improved.

Specifically, in order to match the shape of the vehicle coatrack 2, in this embodiment, the mounting portion 1-1 of the bracket body 1 is elongated, the hanging portion 1-2 is arranged perpendicular to the longer side of the mounting portion 1-1 and located in a same horizontal plane with the mounting portion 1-1. Thus, the mounting portion 1-1 and the hanging portion 1-2 construct a "convex" -like mounting structure, which has a simple structure and convenient manufacturing process, and may facilitate the reduction of the manufacturing cost.

Preferably, in this embodiment, the hanging portion 1-2 is arranged in the middle of the longer side of the mounting portion 1-1, so that when the vehicle child seat is installed, the shorter sides of the entire mounting bracket body 1 are evenly distributed by force on both sides, which will not only facilitate improving the safety of the fixed vehicle child seat, but also facilitate extending the service life of the entire mounting bracket.

Further, the bracket body 1 also comprises at least one reinforcing rib 1-3 arranged on a connecting transition portion between the mounting portion 1-1 and the hanging portion 1-2. In this embodiment, in order to improve the structural strength of the entire mounting bracket, the bracket body 1 further comprises at least one reinforcing rib 1-3, wherein one end of the reinforcing rib 1-3 is connected with the mounting portion 1-1, the other end is connected with the hanging portion 1-2, so as to improve the connecting strength between the mounting portion 1-1 and the hanging portion 1-2.

Preferably, the reinforcing rib 1-3 is arranged parallel to the shorter side of the mounting portion 1-1, on the one hand, it facilitates the capability of the hanging portion 1-2 to bear the load from forward and lateral directions while improving the overall strength of the entire mounting bracket, on the other hand, it simplifies the manufacturing process and provide better appearance.

Preferably, in this embodiment, the number of the reinforcing rib 1-3 is two. The two reinforcing ribs 1-3 are symmetrically arranged taking the symmetry axis of the shorter side of the mounting portion 1-1 as the center line. Which on the one hand, facilitates balancing the stress of the mounting portion 1-1 and the hanging portion 1-2 when fixing the vehicle child seat, so as to extend the service life of the entire mounting bracket; on the other hand, it can achieve relatively better strength properties and appearance with less manufacturing cost.

Preferably, in order to further improve the manufacturing efficiency, in this embodiment, the reinforcing rib 1-3, mounting portion 1-1 and handing portion 1-2 are formed integrally, which at the same time also facilitates the strength of the entire mounting bracket, so as to extend the service life of the entire mounting bracket, and further guarantee the improvement of the safety of the mounted vehicle child seat.

Specifically, in this embodiment, the connection between the mounting portion 1-1 and the vehicle coutrack 2 is formed by welding, which has high connection strength, good sealing performance, simple process and low connecting cost, and thus may save time and energy. Specially, in addition to welding, the connection between the mounting portion 1-1 and the vehicle coutrack 2 may be achieved by rivet or screw or other fixing methods. Specifically, the corresponding connection methods may be selected according to the actual implementing conditions.

The present disclosure also provides a vehicle, which comprises the vehicle child seat hook mounting bracket above. The vehicle child seat hook mounting bracket provided by the present disclosure, has a simple structure, and only needs to complete the fixed connection between the mounting portion 1-1 of the bracket body 1 and the vehicle coutrack 2, the installation is simple and the assembly efficiency is high; at the same time, the vehicle child seat hook mounting bracket is integrally formed, which has high manufacturing efficiency, and can effectively improve the structural strength of the entire mounting bracket, thereby ensuring the reliability and usage safety of the mounted vehicle child seat, and has strong practicability, which is conducive to the standardization production and promotion.

In conclusion, the present disclosure provides a vehicle child seat hook mounting bracket, which is arranged on the vehicle coatrack, and comprises a bracket body, the bracket body comprises a mounting portion and a hanging portion extending from the mounting portion; a mounting through hole for fixing the vehicle child seat is provided on the hanging portion, the bracket body is fixed on the vehicle coatrack through the mounting portion. By applying the vehicle child seat hook mounting bracket provided by the present disclosure, wherein the mounting portion and the hanging portion are formed integrally, on the one hand the strength of the bracket body is effectively increased, and the capability of the hanging portion to bear the load from forward and lateral directions is increased at the same time, such that the entire structure can meet higher strength requirements and can be applied to different child seats with different strength requirements; on the other hand, the mounting portion and the hanging portion are formed integrally, which has a simple structure, high manufacturing efficiency and low manufacturing cost, the bracket body is fixed on the vehicle coatrack through the mounting portion, which will not involve the vehicle body and the interior trims. Therefore, the process is simplified, so that the manufacturing efficiency is further increased and the cost is saved.

Finally, it should be noted that: the embodiments above are only used to illustrate but not limit the technical solutions of the present disclosure; although the present disclosure has been described in detail with reference to the foregoing embodiments, those of ordinary skill in the art should understand that: they can still modify the technical solutions described in every foregoing embodiment, or equivalently replace some of the technical features therein as long as these modifications or replacements do not depart from the scope of the attached claims.

## Claims

1. A vehicle child seat hook mounting bracket, which is arranged on a vehicle coatrack (2), the vehicle child seat hook mounting bracket comprising a bracket body (1), wherein the bracket body (1) comprises a mounting portion (1-1) and a hanging portion (1-2) extending from the mounting portion (1-1); a mounting through hole (1-2-1) for fixing the vehicle child seat is provided on the hanging portion (1-2), and the bracket body (1) is fixed on the vehicle coatrack (2) through the mounting portion (1-1), **characterized in that**, the mounting portion (1-1) is elongated, the hanging portion (1-2) is arranged perpendicular to a longer side of the mounting portion (1-1) and located in a same horizontal plane with the mounting portion (1-1).

2. The vehicle child seat hook mounting bracket of claim 1, **characterized in that**, the hanging portion (1-2) is arranged in a middle of the longer side of the mounting portion (1-1).

3. The vehicle child seat hook mounting bracket of one of claims-1 or 2, **characterized in that**, the bracket body (1) further comprises at least one reinforcing rib (1-3), the reinforcing rib (1-3) is arranged on a connecting transition portion between the mounting portion (1-1) and the hanging portion (1-2).

4. The vehicle child seat hook mounting bracket of claim 3, **characterized in that**, the reinforcing rib (1-3) is arranged parallel to a shorter side of the mounting portion (1-1).

5. The vehicle child seat hook mounting bracket of claim 3 or 4, **characterized in that**, a number of the reinforcing rib (1-3) is two, the two reinforcing rib (1-3) are symmetrically arranged taking the symmetry axis of a shorter side of the mounting portion (1-1) as center line.

6. The vehicle child seat hook mounting bracket of claim 3, **characterized in that**, the reinforcing rib (1-3), mounting portion (1-1) and hanging portion (1-2) are formed integrally.

7. The vehicle child seat hook mounting bracket of claim 1, **characterized in that**, connection between the mounting portion (1-1) and the vehicle coatrack (2) is formed by welding.

8. A vehicle, **characterized in that**, comprising the vehicle child seat hook mounting bracket of any one of claims 1 to 7.

## Patentansprüche

1. eine Hakenhalterung für Kindersitze des Fahrzeugs, die auf einer Fahrzeughülle (2) angeordnet ist, die Halterungen für den Kindersitz, bestehend aus einer Halterung für die Halterung (1), wobei der Halterung (1) ein Befestigungsteil (1-1) und ein hängender Teil (1-2), der sich vom Befestigungsteil (1-1) erstreckt, umfasst; eine Halterung durch Loch (1-2-1) zur Befestigung des Kindersitzes des Fahrzeugs auf dem hängenden Teil (1-2) vorhanden ist, und die Halterung (1) ist auf der Fahrzeugverkleidung (2) durch den Befestigungsteil (1-1) befestigt, der **dadurch gekennzeichnet ist, dass** der Befestigungsteil (1-1) länglich ist, der hängende Teil (1-2) rechtwinklig auf eine längere Seite des Anbauteils (1-1) angeordnet ist und in derselben Horizontalebene mit dem Befestigungsteil (1-1).

2. Die Halterung für die Hakenbefestigung des Kindersitzes des anspruch 1, die **dadurch gekennzeichnet ist, dass** der hängende Teil (1-2) in der Mitte der längeren Seite des Befestigungsteils (1-1) angeordnet ist.

3. Die Halterungen für den Kindersitz-Haken eines der anspruch 1 oder 2, die darin gekennzeichnet sind, dass die Halterung (1) weiter mindestens eine Verstärkerrippe (1-3) umfasst, die Verstärkungsrippe (1-3) auf einer Verbindungsteil zwischen dem Befestigungsteil (1-1) und dem hängenden Teil (1-2) angeordnet ist.

4. Die Halterung für die Hakenbefestigung des Kindersitzes des anspruch 3, die darin gekennzeichnet ist, dass die Verstärkungsrippe (1-3) parallel zu einer kürzeren Seite des Befestigungsteils (1-1) angeordnet ist.

5. Die Halterung für die Befestigung des Kindersitzes der anspruch 3 oder 4, die darin charakterisiert ist, dass eine Zahl der verstärkenden Rippe (1-3) zwei ist, die beiden verstärkenden Rippen (1-3) sind symmetrisch angeordnet, indem die Symmetrieachse einer kürzeren Seite der Befestigungsteil (1-1) als Mittellinie.

6. Die Halterungen für den Kindersitz der anspruch 3, die darin charakterisiert sind, dass die verstärkende Rippe (1-3), der Befestigungsteil (1-1) und der hängende Teil (1-2) vollständig geformt sind.

7. Fahrzeugkindersitzhaken-Montagehalterung nach Anspruch 1, **dadurch gekennzeichnet, dass** die Verbindung zwischen dem Montageabschnitt (1-1) und der Fahrzeuggarderobe (2) durch Schweißen gebildet wird.

8. Ein dadurch charakterisiertes Fahrzeug, das die Halterung für die Hakenbefestigung des Kindersitzes eines der anspruch 1 bis 7 umfasst.

## Revendications

1. Un support de montage du crochet du siège enfant du véhicule, qui est disposé sur une enveloppe du véhicule (2), le support de montage du crochet du siège enfant du véhicule comprenant un corps du support (1), dans lequel le corps du support (1) comprend une partie de montage (1-1) et une partie de suspension (1-2) s'étendant de la partie de montage (1-1); un trou de montage (1-2-1) pour fixer le siège enfant du véhicule est prévu sur la partie de montage (1-2), et la partie de montage (1-1) est fixée sur la paroi du véhicule (2) par la partie de montage (1-1), **caractérisée** en ce sens que la partie de montage (1-1) est allongée, la partie de montage (1-2) est disposée perpendiculairement à une partie plus longue de montage (1-1) et situé dans un même plan horizontal avec la partie de montage (1-1).

2. Le support de montage du crochet du siège enfant du véhicule selon la revendication 1, caractérisé en ce sens que la partie de suspension (1-2) est disposée au milieu du côté plus long de la partie de montage (1-1).

3. Le support de montage selon l'une des revendications 1 ou 2, **caractérisé par le fait que** le corps du support (1) comprend en outre au moins une nervure de renforcement (1-3), la nervure de renforcement (1-3) est disposée sur une partie de transition de raccordement entre la partie de montage (1-1) et la partie de suspension (1-2).

4. Le support de montage du crochet de siège enfant du véhicule selon la revendication 3, caractérisé en ce sens que la nervure de renforcement (1-3) est disposée parallèlement à un côté plus court de la partie de montage (1-1).

5. Le support de montage du crochet de siège enfant du véhicule selon la revendication 3 ou 4, **caractérisé en ce que**, un nombre de la nervure de renforcement (1-3) est deux, les deux nervures de renforcement (1-3) sont disposées symétriquement en prenant l'axe de symétrie d'un côté plus court de la partie de montage (1-1) comme ligne centrale.

6. Le support de montage du crochet du siège enfant du véhicule selon la revendication 3, caractérisé en ce sens que la nervure d'armature (1-3), la partie de montage (1-1) et la partie de pendaison (1-2) sont constituées intégralement.

7. Le support de montage du crochet du siège enfant du véhicule selon la revendication 1, caractérisé en ce sens que le raccordement entre la partie de montage (1-1) et la partie de montage du véhicule (2) est formé par soudage.

8. Un véhicule, caractérisé en cela, comprenant le support de montage du crochet de siège enfant du véhicule selon les revendications de 1 à 7.
